# EUROPÄISCHE PATENTSCHRIFT

(11) **EP 0 727 587 B1**
(45) Veröffentlichungstag und Bekanntmachung des Hinweises auf die Patenterteilung: **22.12.1999**
(21) Anmeldenummer: 96101869.4
(22) Anmeldetag: 09.02.1996
(51) Int. Cl.: F16C 19/55, F16C 3/22

(54) **Exzenterlager**
Eccentric bearing
Palier excentrique

(30) Priorität: 17.02.1995 DE 29502630 U
(43) Veröffentlichungstag der Anmeldung: 21.08.1996
(73) Patentinhaber: SKF GmbH, 97421 Schweinfurt (DE)
(72) Erfinder: Dittenhöfer, Thomas, D-97456 Dittelbrunn (DE)

(56) Entgegenhaltungen:
- DE-A- 3 912 449
- FR-A- 2 554 041
- US-A- 2 979 367

## Beschreibung

Die Erfindung betrifft ein Exzenterlager nach dem Oberbegriff des Hauptanspruches.

Bei einem solchen Lager nach der DE-A-3 912 449 wird ein massiver Mittelring mit eingearbeiteten Laufbahnen verwendet. Der Mittelring muß deshalb bei dieser Ausführung stets mit engen Toleranzen dem jeweiligen Anwendungsfall angepaßt werden. Obwohl an der Funktion des bekannten Exzenterlagers nichts auszusetzen ist, ergeben sich noch Ansatzpunkte für die Reduzierung der Herstellkosten.

Aufgabe der Erfindung ist es, ein Exzenterlager der eingangs genannten Art zu schaffen, bei dem die Herstellung des Mittelringes einfacher und kostengünstiger ist.

Die Aufgabe wird gelöst durch den kennzeichnenden Teil des Hauptanspruches. Bei der Herstellung des Mittelringes werden normale Laufringe mit konzentrischen Mantel- und Bohrungsflächen verwendet, die im normal üblichen Verfahren hergestellt werden können. Dem Einsatz von genormten Laufringen steht nichts im Wege, wenn nicht besondere Platzverhältnisse Wandstärkenreduzierung erfordern. Damit können grundsätzlich zwei aus der Normalreihe entnommene Wälzlager verwendet werden. Sie werden exzentrisch ineinander gelegt und durch Einspritzen eines Trag- oder Verbindungsringes zueinander fixiert.

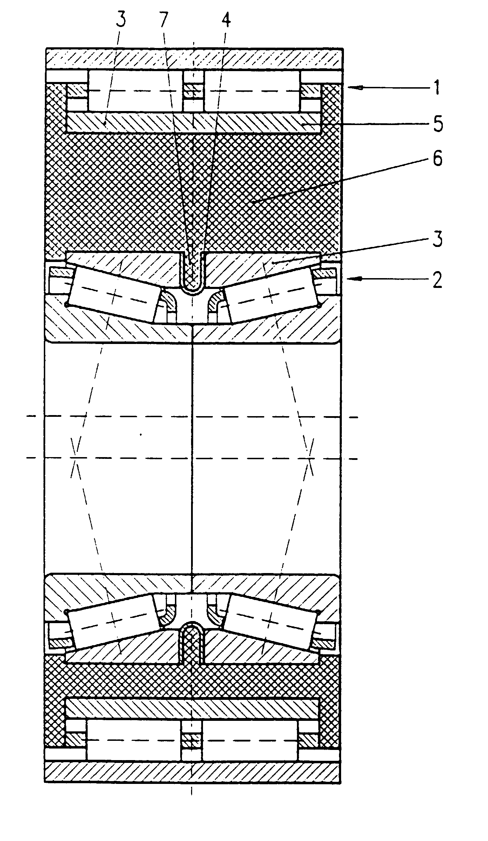

Diese und weitere Merkmale werden nachfolgend an dem in der Zeichnung dargestellten Beispiel beschrieben.

Die einzige Figur zeigt ein Exzenterlager mit einem äußeren, zweireihigen Zylinderrollenlager 1 und einem inneren zweireihigen Kegelrollenlager 2 in O-Anordnung. Dieses ist mit zwei getrennten Außenringen 3 versehen, die durch ein balgförmiges Federelement 4 axial verspannt und damit spielfrei angestellt sind. Das Kegelrollenlager 2 wie auch das Zylinderrollenlager 1 weisen normale konzentrisch hergestellte Laufringe auf.

In der dargestellten Form wurden die beiden zusammengebauten Wälzlager 1, 2 exzentrisch zueinander in eine nicht dargestellte Spritzgießform gelegt und zwischen den Innenring 5 des Zylinderrollenlagers 1 und die Außenringe 3 des Kegelrollenlagers 2 ein Tragring 6 aus Kunststoff eingespritzt.

Nach dem Aushärten sind die beiden Wälzlager 1, 2 miteinander verbunden und formschlüssig fixiert. In den U-förmigen Querschnitt 7 des Federelementes 4 ist ebenfalls Kunststoff eingedrungen und legt somit die gegenseitige Position der beiden Außenringe 3 des Kegelrollenlagers 2 zueinander fest. Es ergbit sich damit ein spielfreies Kegelrollenlager 2 unabhängig von Fertigungstoleranzen.

Diese Vorgehensweise, wie hier am inneren Kegelrollenlager 2 dargestellt, könnte bei Verwendung eines entsprechenden Wälzlagers für radial außen ebenfalls angewendet werden.

## Patentansprüche

1. Exzenterlager mit drei übereinander angeordneten Laufringen, wovon einer mit dem Mittelring dieser Laufringe ein inneres und der andere mit dem Mittelring ein äußeres Wälzlager bilden, dadurch gekennzeichnet, daß der Mittelring (3, 5, 6) aus jeweils einer Lagerringeinlage (3, 5) für die beiden Wälzlager (1, 2) und einen diese formschlüssig positionierenden Tragring (6) aus gegossenem oder gespritztem Kunststoff besteht.

2. Exzenterlager nach Anspruch 1, dadurch gekennzeichnet, daß eines der Wälzlager (1, 2) als zweireihiges Schräglager (2) in O- oder X-Anordnung mit getrennten Schräglagerringen (3) ausgebildet ist, die vor dem Einspritzen des Tragringes (6) durch ein Federelement (4) spielfrei angestellt und danach fixiert sind.

## Claims

1. Eccentric bearing with three races arranged one above th other, of which one froms an inner rolling contact and bearing with the central ring of these races and the other forms an outer rolling contact bearing with the central ring of these races, characterised in that the central ring (3, 5, 6) respectively consists of a bearing ring insert (3, 5) for the two rolling contact bearings (1, 2) and a support ring (6) of cast or injected plastec positioning these in a form-fitting manner.

2. Eccentric bearing according to Claim 1, characterised in that one of the rolling contact bearings (1, 2) is configured as a two-row inclined bearing (2) in O or X arrangement with separate inclined bearing rings (3) which are set without clearance by a spring element (4) before the injection of the support ring (6) and are subsequently fixed.

## Revendications

1. Palier excentrique comprenant trois bagues de roulement disposées les unes dans les autres parmi lesquelles l'une forme un roulement intérieur avec la bague médiane parmi ces bagues et l'autre forme un roulement extérieur avec la bague médiane, caractérisé par le fait que la bague médiane (3, 5, 6) est constituée d'un insert de bague de roulement (3, 5) pour chacun des deux roulements (1, 2) et d'une bague de support (6) en matière plastique moulée ou injectée, positionnant lesdits inserts par complémentarité de forme.

2. Palier excentrique suivant la revendication 1, caractérisé par le fait que l'un des roulements (1, 2) est réalisé sous forme de roulements (2) à deux rangées d'éléments roulants à contact oblique, à montage en O ou X, avec des bagues de roulement (3) séparées à contact oblique, lesquelles sont, avant l'injection de la matière plastique formant la bague de support (6), réglées sans jeu de roulement par un élément de ressort (4) et sont ensuite fixées.
